# EUROPEAN PATENT APPLICATION

(11) **EP 1 858 221 A1**
(43) Date of publication of application: **21.11.2007**
(21) Application number: 06405209.5
(22) Date of filing: 15.05.2006
(51) Int. Cl.: H04L 29/06, G06F 21/00

(54) **Firewall and intrusion detection system**

(71) Applicant: ABB RESEARCH LTD., 8050 Zürich (CH)
(72) Inventor: Naedele, Martin, 8050 Zürich (CH); Dzung, Dacfey, 5430 Wettingen (CH); Sager, Patrick, 5400 Baden (CH)
(74) Representative: ABB Patent Attorneys

(57) **Abstract**

The disclosed firewall/ intrusion detection system comprises at least one network interface, at least one packet filtering engine, at least one rule base stored in a memory, said rule base defining access or drop rules based on bit patterns in a message, and a physical network parameter detection unit.
The inventive firewall/ intrusion detection system filters and analyzes communication on an electronic network based on the physical layer parameters of the networks.

## Description

### Background of the Invention

This invention relates to the field of electronic networks, more particularly to the field of firewalls and intrusion detection systems.

A Fieldbus is an industrial network system for real-time distributed control. A complex automated industrial system, e.g. a manufacturing assembly line, is controlled by an organized hierarchy of controller systems. In this hierarchy there is usually a central computer at the top, where an operator can monitor or program the whole system. This is typically linked to a middle layer of programmable logic controllers (PLC) via a bus system (e.g. Ethernet). At the bottom of the control chain is the fieldbus which links the PLCs to the components which actually do the work such as sensors, actuators, motors, console lights, switches and contactors.

Currently several new fieldbus protocols have been submitted for international standardization. These protocols are based on Ethernet but try to achieve real-time communication behavior.

PROFInet IRT (isochronous Real Time) is an example of a plant-wide fieldbus standard defined by IEC 61158 and IEC 61784 for use in distributed automation systems. It was developed for systems requiring sub-microsecond synchronization, typically high-performance motion control systems. Using full-duplex switched Fast Ethernet, it divides the communication cycle into a deterministic real time channel reserved for predefined periodic communication of real-time process data and a standard TCP/IP open channel available as best effort medium for additional data transfer, like file uploads. The channel ratio is system-dependent and is chosen by the system engineer. While the real time channel is less likely to be an attack vector, because it is typically not exposed to or reachable from higher-level or outside networks through routing, the channel for additional data transfer is more exposed and more likely to be attacked.

In computing, a firewall is a piece of hardware and/or software which functions in a networked environment to prevent some communications forbidden by the security policy. Various types of firewalls (static filtering, stateful filtering, stateful inspection, proxies) are known.

A stateful firewall keeps track of the state of network connections (such as TCP streams) traveling across it. The firewall is programmed to distinguish legitimate packet for different types of connections. They evaluate bits within the packets as well as state information from previous packets for their forwarding information. Only packets matching a known connection state will be allowed by the firewall; others will be rejected.

Equally, rule based and statistical intrusion detection systems are known, such as Snort (an open source network intrusion prevention and detection system utilizing a rule-driven language, combining signature, protocol and anomaly based inspection methods), Bro (a Unix based network based Intrusion Detection System developed by the Lawrence Berkeley National Lab and the International Computer Science Institute), and various research prototypes. They evaluate bits within the message as well as state information from previous messages for their alerting decision.

### Summary of the Invention

One object of the present invention is to propose a firewall and/ or an intrusion detection system that applies different filtering rules to a message received on a network interface without creating processing delay for the real-time traffic.

The inventive firewall/ intrusion detection system filters and analyzes communication on an electronic network based on the physical layer parameters of the networks.

The inventive system works like a conventional firewall or intrusion detection system, but applies different filtering or detection rule sets to messages based on certain physical layer parameters of the network.

In a first embodiment the inventive firewall/ intrusion detection system analyzes the timing of a message relative to other messages:
- inherent timing of communication system: In communication systems using time-slotted access, such as time division multiple access, messages are expected to be received within well-defined time windows which are synchronized to broadcast messages sent by a central communication coordinator.
- time-sync messages: The relative timing may be determined according to a local time synchronization protocol like IEEE1588 used on the same or a different communication channel, or using a clock distribution channel.
- relative to wall-clock time: The relative timing may be determined using absolute time (wall clock time) by each of the communication participants and the firewall/ intrusion detection system. For this purpose, each device may use a built-in clock of sufficient accuracy or a receiver of an absolute time distribution system (DCF77, GPS).

In a second embodiment the inventive firewall/ intrusion detection system analyzes the carrier frequency. The firewall receives messages on channels with different carrier frequencies (e.g. for optical or radio links) (or obtains information about carrier frequency from the actual receiver device, if separate) and applies different rules to these channels.

In a second third embodiment the inventive firewall/ intrusion detection system analyzes the received power/ signal strength. The firewall receives messages on channels with different signal strength (or obtains information about signal strength from the actual receiver device, if separate) and applies different rules to these channels. A strong signal indicating close physical proximity of the sender may thus be subject to different filtering than a weak signal indicating physical distance of the sender).

### Brief Description of the Drawings

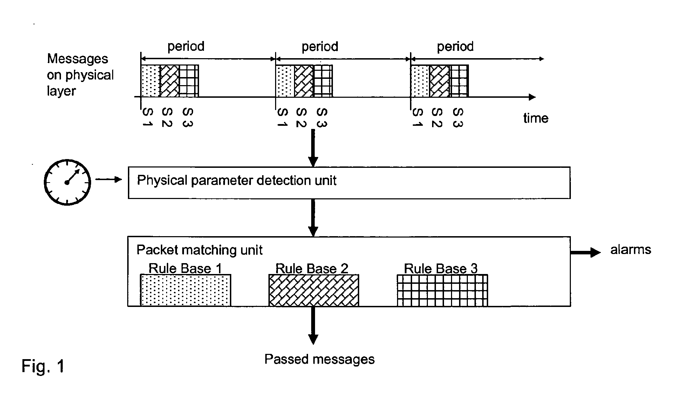

Some of the features, advantages, and benefits of the present invention having been stated, others will become apparent as the description proceeds when taken in conjunction with the accompanying drawing in which
- Fig. 1: schematically shows the setup of an inventive firewall/ intrusion detection system.

### Description of the Preferred Embodiments

The present invention will now be described more fully hereinafter with reference to the accompanying drawing. This invention may, however, be embodied in many different forms and should not be construed as limited to the embodiments set forth herein. Rather, these embodiments are provided so that this disclosure will be thorough and complete, and will fully convey the scope of the invention to those skilled in the art.

The inventive firewall/ intrusion detection system schematically shown in Fig. 1 comprises at least one network interface, with hardware and software to transfer information between an application and a communication network. It further comprises at least one packet matching engine, a software application or hardware mechanism for matching packets received by the network interface to certain filtering rules. In case of a firewall system, depending on the rule, the packets are dropped or rejected if the match of the packets is insufficient or allowed and passed on to other applications on the host if the match of the packets is OK. In case of an intrusion detection system, if the match of the packets is insufficient an alert is executed. The rules may apply to any part of the message content. Firewall rules for TCP/IP networks typically match IP and TCP layer parameters. The access/ drop or alerting rules are stored as rule base in a memory.

Typically, the matching to the rule base is based on bit pattern comparison, independent of message semantics. The pattern matching may make use of information about previously transmitted messages (stateful matching). For the purpose of this invention message is defined as a logical/ semantic unit of data transported between two applications or application components, using a communication network. Messages are formed according to specifications/ protocols, which allow giving meanings to the transmitted bit pattern.

The inventive intrusion detection system further comprises a physical message parameter detection unit. This is a subsystem that explicitly or implicitly annotates messages with a certain parameter or parameter set of the physical transmission layer, such as used physical layer, timing relative to a certain period, carrier frequency, or signal strength.

In an embodiment of the inventive firewall/ intrusion detection system the physical message parameter detection unit is a timing unit.

Assuming that transmission, i.e. of real-time data, is cyclic, then certain parts (time slots) of each cycle may be allocated to certain real-time messages and the remaining part of the cycle to best effort communication. Each slot is defined by its relative start and end in time with respect to the cycle start. The timing unit determines the cycle start based on messages received from a communication coordinator, a built in clock (sufficiently accurate), a clock signal received from an external absolute (DCF77, GPS) or relative (clock generator) time source. Transmission of cycle start times between time source and timing unit of the firewall/ intrusion detection system may be inline with the transmitted messages, part of the transmitted messages (synchronous communication) or use additional communication ports (e.g. a clock port). The timing unit is responsible for associating a received bit sequence (and the corresponding message) with one of the slots based on the relative time of arrival.

In another embodiment of the inventive firewall/ intrusion detection system the physical network parameter detection unit is a carrier frequency detection unit.

If the firewall/ intrusion detection system device receives signals/ messages on different carrier frequencies, it has to know/ detect those carrier frequencies to be able to process the messages and convert them from physical representations of bits to logical messages. The carrier frequencies may either be configured or detected from the signal using well-known signal processing algorithms. The carrier frequency unit associates/ annotates each received logical message with information about its original carrier frequency.

In another embodiment of the inventive firewall/ intrusion detection system the physical network parameter detection unit is a signal strength detection unit.

The signal strength detection unit operates in principle like the carrier frequency detection unit, except that the signal strength is used as differentiation parameter. Again, the signal processing algorithms are well-known in the art.

The inventive firewall/ intrusion detection system may comprise additional rule bases with rules referring to the same or different bit patterns in a message. Preferably, the applicable rule base for a given packet or message is based on the state of the physical message parameter detection unit. The rules applied to each physical parameter set (e.g. time slot) may be the same, or different.

In another embodiment of the inventive firewall/ intrusion detection system, the state of the time unit depends on the time passed relative to a reference message.

If the reference message is a dedicated time synchronization message, it is received through the network interface or through a separate port

Alternatively, the reference message is generated internally by the timing unit. For that purpose, the timing unit preferably comprises a high precision clock.

Upon reception of a bit sequence of a message on the network interface, the inventive firewall/ intrusion detection system annotates the message with the value of a specific physical parameter at the time of reception, either using absolute values or one class out of a predefined set of classes (e.g. time slot S1, slot S2, or slot S3). Then the inventive firewall/ intrusion detection system is looking for rules based on the physical parameter annotation (e.g. select rule base for time slot S2) and compares the message parts to rules in the selected rule base. Potentially, the rules to be compared with are a subset of the rule base selected according to the rule base state according to previous messages/rule matches. Finally the inventive firewall/ intrusion detection system executes the action associated with one or multiple of the matching rules.

In the drawing and the specification, there have been disclosed typical preferred embodiments of the invention, and although specific terms are employed, the terms are used in a descriptive sense only and not for purposes of limitation. The invention has been described in considerable detail with specific reference to these illustrated embodiments. It will be apparent, however, that various modifications and changes can be made within the spirit and scope of the invention as described in the foregoing specification and as defined in the appended claims.

## Claims

1. Firewall system comprising at least one network interface, at least one packet filtering engine, at least one rule base defining access or drop rules based on bit patterns in a message, and a physical network parameter detection unit.

2. Intrusion detection system comprising at least one network interface, at least one packet filtering engine, at least one rule base defining alarming rules based on bit patterns in a message, and a physical network parameter detection unit.

3. System of any of claims 1 or 2, wherein the physical network parameter detection unit is a timing unit.

4. System of any of claims 1 or 2, wherein the physical network parameter detection unit is a carrier frequency detection unit.

5. System of any of claims 1 or 2, wherein the physical network parameter detection unit is a signal strength detection unit.

6. System of any of claims 1 to 5, wherein multiple rule bases may be defined which may contain rules referring to the same or different bit patterns in the message.

7. System of claim 6, wherein the applicable rule base for a given packet is based on the state of the physical network parameter detection unit.

8. System of claim 3, wherein the state of the time unit depends on the time passed relative to a certain message.

9. System of claim 8, wherein said message is received either through the at least one network interface or through a separate port or generated internal to the time unit, message preferably being a dedicated time synchronization message.

10. System of claim 8, wherein said message is generated internal to the time unit, the internal time generation preferably being a high precision clock.
